# DEMANDE DE BREVET EUROPEEN

(11) **EP 4 807 319 A1**
(43) Date de publication de la demande: **16.09.2026**
(21) Numéro de dépôt: 26164513.9
(22) Date de dépôt: 13.03.2026
(51) Int. Cl.: G01C 19/5691, G01C 19/5776

(54) **PROCÉDÉ DE DÉTERMINATION DE DONNÉES DE NAVIGATION AU MOYEN D'UN DISPOSITIF GYROMÉTRIQUE ET DISPOSITIF GYROMÉTRIQUE CORRESPONDANT**

(30) Priorité: 14.03.2025 FR 2502558
(71) Demandeur: THALES, 92190 Meudon (FR)
(72) Inventeur: LOMBARDI, Warody, 26000 VALENCE (FR); LEGOLL, Sebastien, 26000 VALENCE (FR); VERCIER, Nicolas, Jean-Marc, Frédéric, 26000 VALENCE (FR)
(74) Mandataire: Lavoix

(57) **Abrégé**

La présente invention concerne un procédé (100) de détermination de données de navigation (5) comprenant la fourniture (110) à un calculateur (15) d'un dispositif gyrométrique d'au moins une série de Fourier d'un terme d'erreur (δ_{Z}(t)) modélisant au moins un défaut d'un gyromètre (10) du dispositif gyrométrique, fonction d'une position angulaire (θ_{Z}) de l'élément vibrant (75) ; la sélection (120) d'au moins une gamme de fréquences sur la base d'une pluralité d'amplitudes (A_{iZ}) et de fréquences respectives (fᵢ) de ladite série de Fourier ; la détermination (130) d'un filtre passe-bande et d'un bruit blanc continu (w(t)) à fournir en entrée du filtre passe-bande pour obtenir un bruit filtré (x(t)) en sortie ; la détermination (140) d'un modèle de l'erreur commise sur une mesure (Ω_{Z,mes}(t)) du gyromètre (10) sur la base dudit bruit filtré (x(t)) ; et la détermination (145) des données de navigation (5) sur la base dudit modèle déterminé et d'au moins une mesure du gyromètre (10).

## Description

La présente invention concerne un procédé de détermination de données de navigation au moyen d'un dispositif gyrométrique comprenant un calculateur et un gyromètre ainsi que le dispositif gyrométrique correspondant.

Un capteur gyrométrique à effet Coriolis (en anglais « Coriolis Vibratory Gyroscope », CVG) permet de mesurer la composante suivant un axe, appelé axe de sensibilité du CVG, d'un vecteur vitesse de rotation instantanée d'un référentiel lié à un boîtier du capteur par rapport à un référentiel inertiel.

Le CVG comprend pour cela un élément vibrant du capteur apte à vibrer par rapport au boîtier. La mesure est effectuée grâce aux effets de la force inertielle de Coriolis qui s'exerce sur l'élément vibrant.

L'élément vibrant d'un CVG est apte à vibrer suivant deux directions de vibration coplanaires, appelées direction du mode pilote et direction du mode de détection, le travail de la force de Coriolis permettant un transfert d'énergie mécanique entre les deux directions.

L'axe de sensibilité du CVG est orthogonal au plan des directions du mode pilote et du mode de détection.

Pour les mesures, l'élément vibrant est excité suivant la direction du mode pilote à sa fréquence de résonance par le système d'excitation. L'amplitude des vibrations suivant le mode pilote est maintenue constante au moyen d'un système d'asservissement de la tension appliquée au système d'excitation. Les éventuelles variations de la fréquence de résonance, notamment liées à des variations de la température de l'élément vibrant, sont suivies au moyen d'un système d'asservissement de la fréquence.

Les mesures gyrométriques sont entachées d'erreurs liées aux défauts intrinsèques du CVG.

Parmi ces défauts, on peut citer les anisotropies de raideur ou d'amortissement de l'élément vibrant, les défauts de l'électronique de commande de l'excitation ou de l'électronique de détection de la position de l'élément vibrant, les défauts de la tension électrique de référence pour l'excitation, etc.

Les mesures gyrométriques sont intégrées pour calculer l'attitude du référentiel lié au boîtier du capteur par rapport à un autre référentiel (par exemple un référentiel inertiel). Elles peuvent être également combinées à des mesures accélérométriques. L'intégration de ces mesures gyrométriques et accélérométriques permet alors de calculer la vitesse et la position du boîtier lié au capteur.

Les erreurs sur les mesures gyrométriques peuvent provoquer une erreur augmentant avec le temps sur le calcul de données de navigation telles que l'attitude, la vitesse et/ou la position du boîtier.

De telles erreurs peuvent rendre nécessaire un recalage plus ou moins fréquent du CVG.

Pour procéder à ce recalage, il est connu d'hybrider un système de navigation inertielle comprenant le CVG avec une information provenant de la détection d'un événement particulier, par exemple la détection d'une immobilité du boîtier du capteur, ou une information provenant d'un autre capteur, par exemple une information provenant d'un système de positionnement par satellites.

Dans de tels systèmes hybrides, des données de mesure inertielle en provenance du système de navigation inertielle et les informations provenant de la détection d'un événement particulier et/ou d'un autre capteur sont comparées au moyen d'un module d'estimation, ce module d'estimation pouvant implémenter par exemple un filtre de Kalman ou un filtre à gain constants.

Des données de navigation hybridées sont fournies à la sortie du module d'estimation et éventuellement utilisées pour recaler le système de navigation inertielle.

Il est nécessaire d'avoir un modèle fournissant un majorant des erreurs sur les mesures inertielles et en particulier gyrométriques, afin d'effectuer l'hybridation du système de navigation inertielle comprenant le CVG avec une information provenant d'un autre capteur ou de la détection d'un événement particulier.

Parmi les erreurs des gyromètres vibrants, notamment des gyromètres vibrants axisymétriques, certaines sont dites harmoniques car elles sont proportionnelles à des fonctions cosinus ou sinus d'un angle multiple entier de l'angle caractérisant la position du mode pilote dans le référentiel lié au boîtier.

La modélisation de ces erreurs harmoniques est complexe car le nombre d'harmoniques à modéliser peut être élevé et les amplitudes de ces harmoniques sont en général variables dans le temps.

Le document C. I. Chen et al., "Extended Real Model of Kalman Filter for Time-Varying Harmonics Estimation," in IEEE Transactions on Power Delivery, vol. 25, no. 1, pp. 17-26, Jan. 2010, doi: 10.1109/TPWRD.2009.2035217 décrit une méthode de modélisation des erreurs harmoniques au moyen d'un filtre de Kalman, le vecteur d'état du filtre de Kalman comprenant pour chaque harmonique une composante correspondant à l'amplitude respective et une composante correspondant à la phase respective.

La dimension du vecteur d'état correspondant est donc élevée, de sorte que cette méthode est coûteuse en mémoire et en temps de calcul.

Un but de l'invention est donc de proposer un procédé de détermination de données de navigation au moyen d'un dispositif gyrométrique, ce procédé incluant la modélisation d'un défaut de type harmonique d'un gyromètre vibrant du dispositif gyrométrique, ce procédé étant fiable tout en étant moins coûteux en temps et/en mémoire que les procédés de l'art antérieur.

A cet effet, l'invention a pour objet un procédé de détermination de données de navigation au moyen d'un dispositif gyrométrique comprenant un calculateur et un gyromètre, le gyromètre comprenant un boîtier et un élément vibrant par rapport au boîtier, le procédé comprenant :
a) la fourniture au calculateur d'au moins une série de Fourier d'un terme d'erreur modélisant au moins un défaut du gyromètre, ledit défaut étant fonction d'une position angulaire de l'élément vibrant dans un repère lié au boîtier ;
b) la sélection d'au moins une gamme de fréquences sur la base d'une pluralité d'amplitudes et de fréquences respectives de ladite série de Fourier ;
c) la détermination d'un filtre passe-bande et d'un bruit blanc continu à fournir en entrée du filtre passe-bande pour obtenir un bruit filtré en sortie du filtre passe-bande, tels que :
   - une bande passante du filtre contienne ladite gamme de fréquences et ne contienne aucune des fréquences respectives de ladite série de Fourier qui ne sont pas dans ladite gamme de fréquences, et
   - dans la bande passante, l'intégrale d'une densité spectrale de puissance du bruit filtré soit supérieure ou égale à la somme des carrés des amplitudes des composantes de ladite série de Fourier dans cette même bande passante ;
d) la détermination d'un modèle de l'erreur commise sur une mesure effectuée avec le gyromètre sur la base dudit bruit filtré ; et
e) la détermination des données de navigation sur la base dudit modèle déterminé et d'au moins une mesure effectuée par le gyromètre.

A cette fin, le procédé selon l'invention comprend la décomposition en série de Fourier du défaut du gyromètre à modéliser, de manière à identifier les fréquences des harmoniques du défaut et leurs amplitudes.

Comme indiqué précédemment, ces amplitudes peuvent être variables dans le temps. La fourniture de la décomposition en série de Fourier peut dans ce cas être basée sur des données du fabricant du gyromètre et/ou comprendre l'acquisition de mesures effectuées lors d'une calibration préalable du gyromètre, les mesures étant suffisamment nombreuses pour estimer un majorant de l'amplitude de chaque harmonique, ce majorant étant alors fourni dans la décomposition de Fourier.

Au lieu de s'attacher à décrire précisément ces harmoniques comme cela est fait dans les procédés de l'art antérieur, l'erreur commise sur la mesure est modélisée dans le procédé selon l'invention sur la base d'un bruit blanc continu filtré par un filtre passe-bande.

Pour cela, au moins une gamme de fréquences dans laquelle des harmoniques présentent une amplitude significative est déterminée sur la base de la décomposition en série de Fourier, la bande-passante du filtre passe-bande étant choisie pour englober cette gamme de fréquences.

Le bruit filtré obtenu après filtrage du bruit blanc continu par le passe-bande forme une enveloppe des harmoniques qui sont comprises dans la bande passante du filtre.

Le bruit filtré représente donc les harmoniques comprises dans la bande passante du filtre. Autrement dit, le bruit filtré englobe ces défauts véritables mais sans tenir compte du détail de chaque harmonique de manière à la fois à ne pas sous-estimer l'erreur commise et à limiter le coût en temps et en mémoire du procédé.

Le procédé selon l'invention permet donc un gain en mémoire et en temps lors de son implémentation, sans sous-estimation de l'erreur véritable commise sur la mesure.

En fonction de la précision souhaitée, la bande passante du filtre pourra être choisie de manière plus ou moins large et/ou plusieurs filtres ayant des bandes passantes différentes peuvent être combinés.

Suivant d'autres aspects avantageux de l'invention, le procédé comprend une ou plusieurs des caractéristiques suivantes, prises isolément ou suivant toutes les combinaisons techniquement possibles :
- les données de navigation comprennent :
   * des données de navigation hybridées, le procédé comprenant alors la réception par le calculateur de données additionnelles, qui comprennent des données d'accélération et/ou de vitesse et/ou de position et/ou d'attitude fournies par un capteur de données additionnelles et/ou des données relatives à l'état de mouvement du boîtier du gyromètre, et l'utilisation de ces données additionnelles pour la détermination desdites données de navigation hybridées, et/ou
   * des données de navigation inertielles et des écarts types d'erreur respectifs, ces données et ces écarts-types étant formés à partir de la mesure effectuée avec le gyromètre et d'un écart-type d'une erreur commise sur cette mesure déterminé au moyen dudit modèle déterminé ;
- le filtre passe-bande et le bruit blanc continu sont choisis de manière à ce que, dans la bande passante, l'intégrale de la densité spectrale de puissance du bruit filtré soit égale à la somme des carrés des amplitudes des composantes de ladite série de Fourier dans cette même bande passante ;
- la détermination dudit modèle de l'erreur comprend l'implémentation du filtre passe-bande au moyen d'un modèle de propagation d'état et la détermination du bruit filtré et/ou d'une variance du bruit filtré ;- le modèle de propagation d'état est représenté par le modèle suivant : $\left\{\begin{matrix}\dot{u} \left(t\right) = \left[\begin{matrix}0 & 1 \\ - {\left(2 {πf}_{0}\right)}^{2} & - \frac{2 {πf}_{0}}{{Q}_{F}}\end{matrix}\right] u \left(t\right) + \left[\begin{matrix}0 \\ 1\end{matrix}\right] w \left(t\right) \\ x \left(t\right) = \left[0 {H}_{0}\frac{2 {πf}_{0}}{{Q}_{F}}\right] u \left(t\right)\end{matrix}\right.$ dans lequel :
   * u(t) désigne un vecteur d'état de dimension 2 du modèle de propagation d'état
   * w(t) désigne le bruit blanc continu en entrée du filtre passe-bande,
   * x(t) désigne le bruit filtré obtenu en sortie du filtre passe-bande,
   * f0 désigne une fréquence de résonance du filtre passe-bande,
   * QF désigne un facteur de qualité du filtre passe-bande, et
   * H0 désigne un gain du filtre passe-bande à la fréquence de résonance ;
- une variance du bruit blanc continu, un facteur de qualité du filtre passe-bande, une fréquence de résonance du filtre passe-bande et un gain du filtre passe-bande à la fréquence de résonance sont choisis de façon à ce que la variance du bruit filtré, donnée par la relation ${P}_{1} \left(x\left(t\right)\right) = \frac{2 {πf}_{0} {H}_{0}^{2}}{2 {Q}_{F}} {Q}_{1} \left(w\left(t\right)\right)$, soit supérieure ou égale à la somme des carrés des amplitudes des composantes de ladite série de Fourier dans la bande passante du filtre ;
- le modèle de propagation d'état est calculé au moyen d'un module d'estimation, les composantes du vecteur d'état du modèle de propagation d'état étant des composantes d'un vecteur d'état d'un filtre de Kalman implémenté dans le module d'estimation et ayant au moins une autre composante formée à partir d'une donnée de mesure inertielle déterminée sur la base des mesures effectuées par ledit gyromètre, le bruit filtré étant calculé au sein du filtre de Kalman ;
- le procédé comprend une étape de discrétisation du filtre passe-bande, le modèle de propagation représentant le filtre passe-bande après sa discrétisation ;
- une fréquence de résonance du filtre passe-bande est choisie au centre de ladite bande passante ;
- le gyromètre est configuré pour que la position angulaire de l'élément vibrant varie en fonction d'une vitesse angulaire de commande imposée à cet élément vibrant et/ou d'une vitesse angulaire de rotation du boîtier dans un référentiel inertiel ;
- au moins deux décompositions en série de Fourier sont fournies pour au moins deux vitesses angulaires de rotation du boîtier différentes, ladite bande passante étant sélectionnée sur la base de l'ensemble des décompositions en série de Fourier fournies.

L'invention concerne également un dispositif gyrométrique comprenant un calculateur et un gyromètre, le gyromètre comprenant un boîtier et un élément vibrant par rapport au boîtier, le dispositif gyrométrique étant configuré pour mettre en œuvre les étapes du procédé de détermination de données de navigation.

Suivant un autre aspect avantageux de l'invention, le dispositif gyrométrique comprend une centrale inertielle comprenant ledit gyromètre, et :
* le dispositif gyrométrique comprend en outre un capteur configuré pour fournir au calculateur des données additionnelles comprenant des données d'attitude et/ou de vitesse et/ou de position et/ou d'accélération, et/ou
* la centrale inertielle est en outre configurée pour fournir des données relatives à l'état de mouvement du boîtier du gyromètre,
le dispositif gyrométrique étant configuré pour déterminer des données de navigation hybridées.

L'invention apparaîtra plus clairement à la lecture de la description qui va suivre, donnée uniquement à titre d'exemple non limitatif, et faite en référence aux dessins dans lesquels :
la figure 1 est une représentation schématique d'un dispositif gyrométrique selon un premier mode de réalisation de l'invention;
la figure 2 est une représentation schématique partielle d'un gyromètre particulier du dispositif gyrométrique de la figure 1 ;
la figure 3 est une représentation du repère capteur et du repère onde du gyromètre de la figure 2 ;
la figure 4 est une représentation sous forme de logigramme du procédé de détermination de données de navigation selon l'invention ;
la figure 5 représente un spectre d'amplitude d'une décomposition en série de Fourier d'un exemple de défaut de type harmonique (courbe C1) et la courbe de densité spectrale de puissance d'un bruit filtré souhaitée (courbe C2) en fonction de la fréquence ; et
la figure 6 représente les courbes C1 et C2 de la figure 5 et la courbe de densité spectrale de puissance d'un bruit filtré obtenue avec un filtre passe-bande d'ordre 4 (courbe C3) en fonction de la fréquence.

L'invention concerne un procédé 100 de détermination de données de navigation 5 au moyen d'un dispositif gyrométrique 7 comprenant un gyromètre 10 et un calculateur 15.

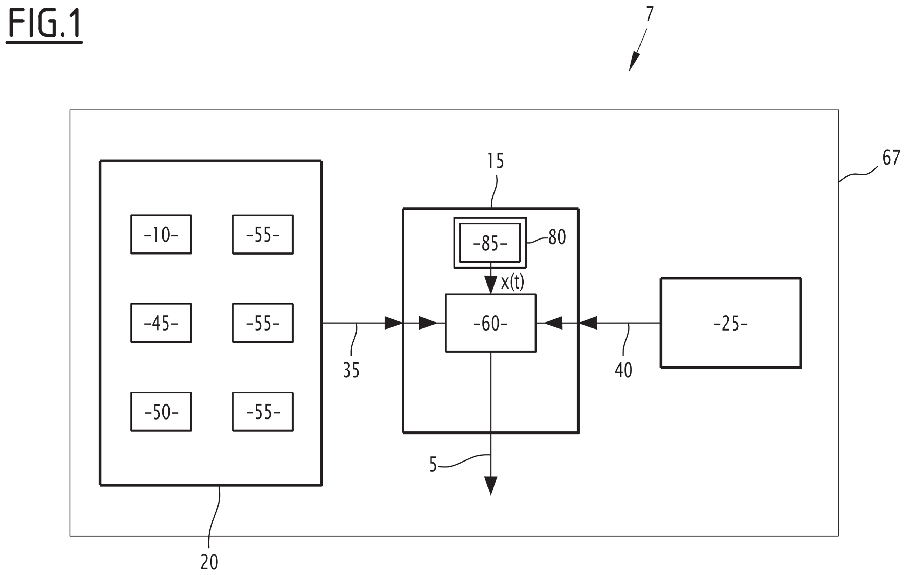

Dans un premier mode de réalisation décrit en référence à la figure 1, le dispositif gyrométrique 7 se présente sous la forme d'une centrale inertielle hybridée, la centrale inertielle hybridée comprenant une centrale inertielle 20 comprenant le gyromètre 10, le calculateur 15, qui est dans ce cas un calculateur d'hybridation de données de mesures inertielles 35 fournies par la centrale inertielle 20 et de données additionnelles 40, et optionnellement un capteur 25 fournissant les données additionnelles 40.

La centrale inertielle hybridée, visible sur la figure 1, équipe un véhicule (non représenté), tel qu'un aéronef ou un véhicule terrestre.

L'architecture de la centrale inertielle hybridée présentée sur la figure 1 est fournie à titre d'exemple illustratif et non limitatif.

La centrale inertielle 20 comprend dans ce mode de réalisation le gyromètre 10.

La centrale inertielle 20 peut comprendre un ou plusieurs gyromètres complémentaires, par exemple deux autres gyromètres complémentaires 45 et 50.

Chaque gyromètre 10, 45, 50 est dans ce cas configuré pour fournir soit directement au calculateur 15, soit à un calculateur de la centrale inertielle 20, des mesures de vitesse angulaire du véhicule par rapport à un axe sensible respectif.

Le cas échéant, les axes sensibles respectifs des trois gyromètres 10, 45, 50 sont de préférence non coplanaires.

La centrale inertielle 20 peut aussi comprendre un ou plusieurs accéléromètres 55.

Chaque accéléromètre 55 est configuré pour fournir soit directement au calculateur 15, soit au calculateur de la centrale inertielle 20 des mesures d'accélération linéaire du véhicule par rapport à un axe sensible respectif.

Le calculateur 15 est donc configuré pour recevoir des données de mesures inertielles 35.

Les données de mesures inertielles 35 comprennent des données de mesure fournies directement par le gyromètre 10 ou formées à partir de ces données de mesure.

Dans un mode de réalisation particulier, les données de mesures inertielles 35 comprennent des données de mesure de vitesse angulaire par rapport à l'axe sensible du gyromètre 10.

En complément ou alternativement, les données de mesures inertielles 35 comprennent des données d'attitude, de vitesse et de position calculées par la centrale inertielle 20 notamment à partir de la vitesse angulaire mesurée par le gyromètre 10.

Dans ce premier mode de réalisation, le calculateur 15 est aussi configuré pour recevoir les données additionnelles 40.

Dans l'exemple représenté sur la figure 1, les données additionnelles 40 sont fournies par le capteur 25.

Le capteur 25 est donc apte à fournir des données additionnelles 40 au calculateur 15, les données additionnelles 40 comprenant des données d'accélération linéaire et/ou angulaire et/ou de vitesse linéaire et/ou angulaire et/ou de position et/ou d'attitude.

Le capteur 25 est par exemple un altimètre, un odomètre ou un récepteur de données additionnelles 40, tel qu'un récepteur de positionnement par satellites, tel qu'un récepteur de signaux GNSS (Géolocalisation et Navigation par un Système Satellites - en anglais « Global Navigation Satellite System ») en provenance d'une pluralité de satellites de navigation d'un ou plusieurs système GNSS, à titre d'exemple le système GPS (en anglais, « Global Positioning System »).

Dans le cas où le capteur 25 est un récepteur de positionnement par satellites, les données additionnelles 40 sont donc des données de mesure GNSS et elles peuvent comprendre des coordonnées de positionnement géographique telles que des distances entre la position du récepteur et les positions des satellites du ou des systèmes GNSS, une latitude, une longitude et/ou une altitude et/ou encore une donnée d'attitude en cap, en roulis et/ou en tangage et/ou au moins une donnée de vitesse linéaire.

Dans un mode de réalisation alternatif ou complémentaire du mode de réalisation représenté sur la figure 1, les données additionnelles 40 sont des données relatives à un état de mouvement d'un boîtier 57 du gyromètre 10 qui sera décrit plus loin, notamment des données relatives à la détection d'une immobilité du boîtier 57. Dans ce cas, les données additionnelles 40 peuvent être obtenues à partir de mesures effectuées par la centrale inertielle 20 elle-même.

La centrale inertielle 20 comprend dans ce cas un module de détermination des données additionnelles 40, ce module (non représenté) recevant en entrée des données de mesure de la centrale inertielle 20 et fournissant en sortie les données additionnelles 40.

Dans le premier mode de réalisation, le calculateur 15 est configuré pour déterminer, et éventuellement fournir sur une sortie du dispositif gyrométrique 7, au moins une donnée de navigation 5 qui est une donnée de navigation hybridée, tenant compte des erreurs de mesure inhérentes aux données de mesure inertielles 35 fournies par la centrale inertielle 20, par exemple les erreurs sur l'attitude, la vitesse et la position du boîtier dues aux erreurs du gyromètre 10, éventuellement en prenant en compte des défauts du capteur 25.

A titre d'exemple, dans le cas où le capteur 25 est un récepteur de positionnement par satellites, les défauts du capteur 25 comprennent les défauts du segment spatial d'émission des signaux GNSS et/ou des défauts dus à la propagation de ces signaux dans l'atmosphère et/ou des défauts matériels du récepteur de positionnement par satellites.

A cette fin, le calculateur 15 reçoit les données de mesures inertielles 35 et les données additionnelles 40.

Le calculateur 15 comprend un module d'estimation 60 et un module de modélisation 80.

Le calculateur 15 présente par exemple une composante matérielle (telle qu'un circuit logique programmable de type FPGA (en anglais, « Field- Programmable Gate Array ») et/ou une composante logicielle. Dans ce dernier cas, la composante logicielle est par exemple mise en œuvre par un ordinateur comprenant au moins un processeur et une mémoire vive.

Dans l'exemple de la figure 1, le calculateur 15 est intégré dans un boîtier principal 67 de la centrale inertielle hybridée, dans lequel sont aussi placés la centrale inertielle 20 et le capteur 25.

En variante, le dispositif gyrométrique 7 est réalisé de manière distribuée, le calculateur 15 étant alors distant du boîtier principal 67, voire distant du véhicule équipé de la centrale inertielle hybridée.

Dans le premier mode de réalisation, le module d'estimation 60 est configuré pour recevoir les données de mesures inertielles 35 ainsi que les données additionnelles 40 du capteur 25.

Le module d'estimation 60 comprend par exemple un filtre de Kalman, dont un vecteur d'état représente une ou plusieurs erreurs commises sur les données de mesures inertielles 35 fournies par la centrale inertielle 20 et/ou sur les données de mesures 40 fournies par le capteur 25.

Dans le premier mode de réalisation, le module d'estimation 60 reçoit en outre un modèle de l'erreur commise sur les mesures gyrométriques effectuées par le gyromètre 10, en particulier sur la vitesse angulaire mesurée selon l'axe sensible du gyromètre 10, ce modèle étant fourni par le module de modélisation 80 et modélisant au moins un défaut harmonique du gyromètre 10.

Dans un mode de réalisation particulier, le module de modélisation 80 est implémenté comme une partie intégrante du module d'estimation 60, comme cela sera décrit plus loin, le module d'estimation 60 étant alors configuré pour déterminer le modèle d'erreur et simultanément fournir au moins une donnée de navigation hybridée 5.

Le module de modélisation 80 est configuré pour échanger des données avec le gyromètre 10 et pour fournir le modèle de l'erreur commise sur les données de mesures inertielles 35, par exemple notamment sur la vitesse angulaire mesurée selon l'axe sensible du gyromètre 10 selon l'invention, comme cela sera décrit plus loin.

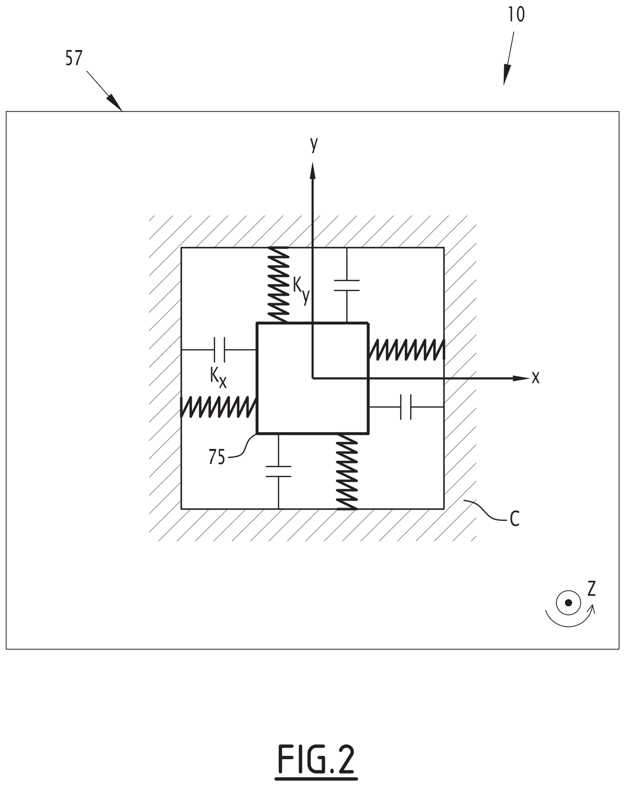

Un exemple de gyromètre 10 est schématiquement représenté sur la figure 2. Les moyens d'excitation et d'asservissement du gyromètre 10 ne sont pas représentés sur cette figure.

Le gyromètre 10 est configuré pour fournir une vitesse angulaire mesurée Ω_{Z,mes}(t) qui estime une vitesse angulaire instantanée réelle Ω_{Z,reel}(t) du boîtier 57 du gyromètre 10 par rapport à son axe sensible, noté Z dans la suite.

A cette fin, le gyromètre 10 comporte le boîtier 57 et un élément vibrant 75 apte à vibrer par rapport au boîtier 57.

Le gyromètre 10 est configuré pour échanger des données avec le module de modélisation 80 du calculateur 15.

Le gyromètre 10 est par exemple réalisé sous forme de système microélectromécanique (en anglais « Micro Electromechanical Sensor », MEMS).

Le gyromètre 10 est par exemple un gyromètre axisymétrique.

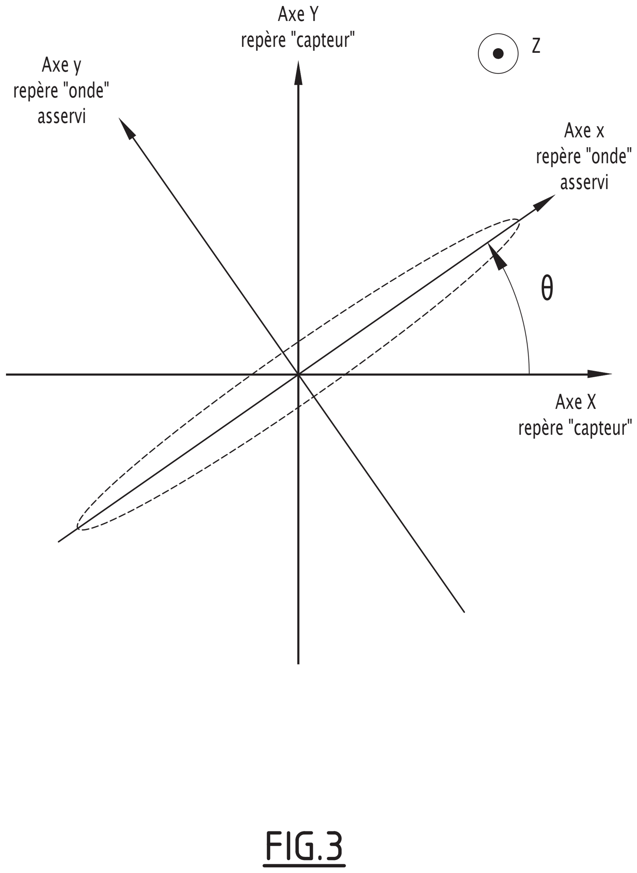

Trois axes X, Y, Z du repère d'espace XYZ d'un référentiel lié au boîtier 57 du gyromètre 10, appelé dans la suite « repère capteur XYZ » sont représentés sur la figure 3.

L'élément vibrant 75 est apte à vibrer dans le plan XY du repère capteur XY suivant deux directions x et y.

Dans la suite, on considère que la direction x est la direction du mode pilote et que la direction y est la direction du mode de détection du gyromètre 10.

Dans la suite, le repère xyZ lié aux directions du mode pilote et du mode de détection est appelé « repère onde xyZ ».

La position du repère onde xyZ par rapport au repère capteur XYZ est repérée au moyen de la coordonnée angulaire θ_{Z} visible sur la figure 3.

La vitesse angulaire instantanée mesurée Ω_{Z,mes}(t) mesurée par le gyromètre 10 peut notamment être déduite de la coordonnée angulaire θ_{Z} caractérisant la position du repère onde xyZ par rapport au repère capteur XYZ.

La vitesse angulaire instantanée mesurée Ω_{Z,mes}(t) est entachée d'erreurs intrinsèquement liées à la conception du gyromètre 10.

En particulier, on peut en général considérer que la vitesse angulaire réelle instantanée Ω_{Z,reel}(t) du boîtier 57 et la vitesse angulaire mesurée Ω_{Z,mes}(t) mesurée par le gyromètre 10 sont liées par une relation de la forme : ${Ω}_{Z , mes} \left(t\right) = \left(1+{ε}_{Z}\left(t\right)\right) {Ω}_{Z , reel} \left(t\right) + {D}_{Z} \left(t\right)$ dans laquelle ε_{Z}(t) et D_{Z}(t) sont des termes d'erreurs induits par les défauts intrinsèques du gyromètre 10.

Les termes d'erreurs ε_{Z}(t) et D_{Z}(t) peuvent ainsi modéliser des défauts respectivement de type facteur d'échelle et de type dérive.

Les termes d'erreurs ε_{Z}(t) et D_{Z} (t) sont généralement variables dans le temps.

L'un des termes d'erreurs ε_{Z} (t) et D_{Z} (t) ou ces deux termes simultanément peuvent comprendre, voire consister en des termes d'erreurs de types harmoniques δ_{Z}(t).

Par erreur de type harmonique δ_{Z} (t), on entend dans la présente demande une erreur qui est fonction de la coordonnée angulaire θ_{Z} caractérisant la position du repère onde xyZ par rapport au repère capteur XYZ et qui peut être modélisée par une fonction périodique de la coordonnée angulaire θ_{Z}.

En conséquence, une erreur de type harmonique δ_{Z}(t) peut aussi être modélisée par une série de Fourier selon l'équation 2 qui suit : ${δ}_{Z} \left({σ}_{Z}\left(t\right)\right) = {\sum }_{i = 1}^{n} {A}_{{i}_{Z}} ∗ cos \left({θ}_{Z}\left(t\right)∗i+{φ}_{{i}_{Z}}\right)$

Le module de modélisation 80 est donc plus particulièrement configuré pour déterminer une modélisation d'au moins une erreur de type harmonique δ_{Z}(t) du gyromètre 10.

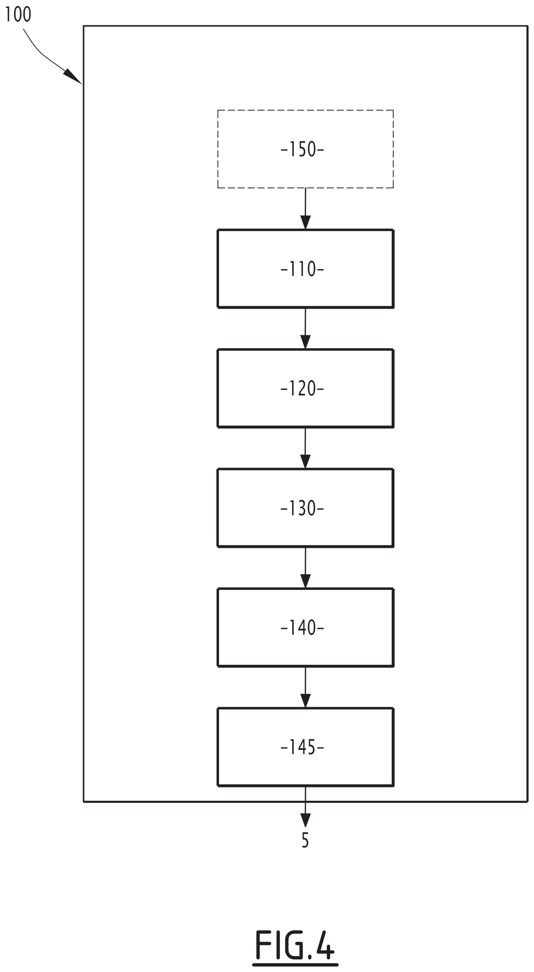

Le procédé 100 de détermination de données de navigation 5 selon l'invention va maintenant être décrit en référence à la figure 4.

Le procédé 100 comprend :
a) la fourniture 110 de la décomposition en série de Fourier du terme d'erreur de type harmonique δ_{Z}(t) modélisant un défaut du gyromètre 10, ce défaut étant fonction de la position angulaire θ_{Z} de l'élément vibrant 75 dans le repère XYZ lié au boîtier 57;
b) la sélection 120 d'au moins une gamme de fréquences sur la base d'une pluralité d'amplitudes A_{iZ} et de fréquences respectives fᵢ de ladite série de Fourier ;
c) la détermination 130 d'un filtre passe-bande et d'un bruit blanc continu w(t) à fournir en entrée du filtre passe-bande pour obtenir un bruit filtré x(t) en sortie du filtre passe-bande ; et
d) la détermination 140 d'un modèle de l'erreur commise sur une mesure effectuée avec le gyromètre 10 sur la base dudit bruit filtré x(t), et
e) sur la base dudit modèle déterminé et d'au moins une mesure effectuée par le gyromètre 10, la détermination 145 de données de navigation 5.

Les données de navigation 5 comprennent par exemple:
* des données de navigation 5 hybridées, le procédé 100 comprenant alors la réception par le calculateur 15 des données additionnelles 40, qui comprennent des données d'accélération linéaire et/ou angulaire et/ou de vitesse linéaire et/ou angulaire et/ou de position et/ou d'attitude fournies par le capteur 25 de données additionnelles 40 et/ou des données relatives à l'état de mouvement du boîtier 57 du gyromètre 10, et l'utilisation de ces données additionnelles 40 pour la détermination desdites données de navigation 5 hybridées, et/ou
* des données de navigation 5 inertielles et des écarts-types d'erreur respectifs, ces données et ces écarts-types étant formés à partir de la mesure effectuée avec le gyromètre 10 et d'un écart-type d'une erreur commise sur cette mesure déterminé au moyen du modèle d'erreur fourni par le module de modélisation 80.

On décrit dans un premier temps un premier mode de réalisation du procédé 100 dans lequel les données de navigation 5 sont des données de navigation hybridées.

Dans ce cas, le procédé 100 peut être mis en œuvre au moyen du dispositif gyrométrique 7 selon le premier mode de réalisation décrit plus haut.

La fourniture 110 de la décomposition en série de Fourier au module de modélisation 80 comprend la fourniture des amplitudes harmoniques A_{iZ} correspondant aux différentes harmoniques de la décomposition en série de Fourier de l'équation 2, ainsi que la fourniture des fréquences fᵢ respectives.

La série de Fourier fournie à l'étape 110 comprend un nombre fini d'harmoniques, par exemple de fréquences fᵢ respectives inférieures à une fréquence seuil supérieure au-delà de laquelle les termes d'erreur harmoniques peuvent être considérés comme négligeables. Par exemple, si une pulsation angulaire de commande est imposée au gyromètre 10, la fréquence seuil peut être choisie en fonction de cette pulsation angulaire de commande.

Les amplitudes harmoniques A_{iZ} peuvent être évaluées à partir de données fournies par le fabricant du gyromètre 10 et/ou lors d'une étape préalable de calibration 150 du gyromètre 10.

L'étape de calibration 150 peut comprendre une ou plusieurs séries de mesure de vitesses angulaires au cours de laquelle la vitesse angulaire du gyromètre 10 selon l'axe sensible Z est imposée à une valeur de consigne connue et mesurée, l'erreur commise sur la vitesse angulaire mesurée étant, pour chaque mesure, évaluée par comparaison de la vitesse angulaire mesurée et de la valeur de consigne.

La décomposition en série de Fourier peut alors être déduite de la série d'erreurs ainsi évaluées.

Les amplitudes harmoniques A_{iZ} des harmoniques de cette série de Fourier peuvent ne pas être strictement constantes dans le temps, notamment du fait des variations de température du gyromètre 10.

Dans ce cas, il est possible d'observer l'évolution de ces amplitudes harmoniques A_{iZ} lors de l'étape de calibration 150 du gyromètre 10 en imposant pour les différentes séries de mesure des conditions de fonctionnement variées et représentatives des possibles variations de température de fonctionnement du gyromètre 10.

Au moins une, ou encore chacune des amplitudes harmoniques A_{iZ} fournies à l'étape de fourniture 110 peut dans ce cas être un majorant des amplitudes respectives observées lors des différentes séries de mesures de l'étape de calibration 150.

Les fréquences fᵢ des termes harmoniques sont fournies sur la base d'une loi d'évolution temporelle de la coordonnée angulaire θ_{Z}.

Notamment, une pulsation angulaire de commande ω_{com} de rotation du repère onde par rapport à l'axe de sensibilité Z du repère capteur peut être imposée à l'élément vibrant 75. Dans ce cas, les fréquences fᵢ des termes harmoniques sont égales à la division par 2π du produit de l'entier i caractérisant l'harmonique respective et de la pulsation angulaire de commande ω_{com}.

Alternativement ou en complément, la coordonnée angulaire θ_{Z} peut évoluer du fait d'un mouvement de rotation du véhicule porteur du gyromètre 10 par rapport à l'axe sensible Z, les fréquences fᵢ des termes harmoniques étant alors décalées de manière plus ou moins importante par rapport à des fréquences de référence respectives suivant l'état de mouvement du véhicule.

Dans ce cas, plusieurs séries de Fourier, voire des gammes de fréquences fᵢ des termes harmoniques peuvent être fournies en entrée au module de modélisation 80, de manière à anticiper le décalage des termes de la décomposition en série de Fourier de l'erreur de type harmonique δ_{Z}(t) au cours du mouvement ultérieur du véhicule.

Lors de l'étape de fourniture 110, le module de modélisation 80 reçoit donc au moins un ensemble des données caractéristiques d'un spectre d'amplitude de la série de Fourier.

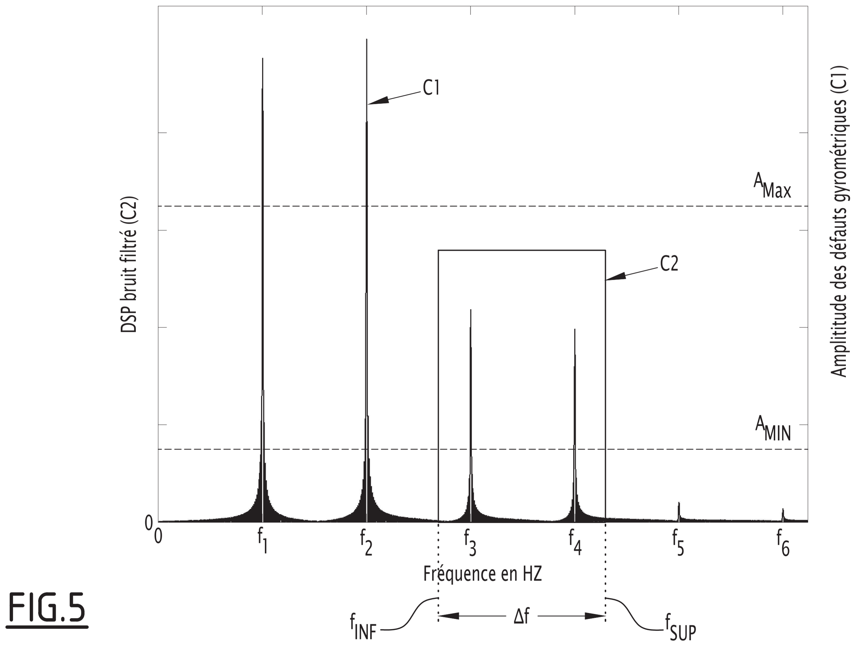

Ce spectre d'amplitude est représenté par la courbe C1 de la figure 5.

Lors de l'étape de sélection 120, au moins une gamme de fréquences Δf est sélectionnée par le module de modélisation 80 sur la base de la pluralité d'amplitudes harmoniques A_{iZ} et de fréquences respectives fᵢ respectives fournies pour ladite série de Fourier.

La sélection 120 peut être effectuée sur la base d'un ou plusieurs critères prédéterminés.

Par exemple, la gamme de fréquences Δf peut être choisie pour englober toutes les fréquences dont l'amplitude respective A_{iZ} est supérieure à une valeur seuil inférieure Aₘᵢₙ et/ou inférieure à une valeur seuil Aₘₐₓ.

Dans l'exemple représenté sur la figure 5, la gamme de fréquences Δf est ainsi choisie pour que la modélisation de l'erreur de type harmonique δ_{Z}(t) comprenne la modélisation des harmoniques de rangs 3 et 4.

Dans cet exemple, les harmoniques de rangs 1 et 2, d'amplitude particulièrement élevée peuvent dans ce cas être gérées au moyen d'une deuxième gamme de fréquences Δf_compl_1 qui sera sélectionnée dans une deuxième itération de l'étape de sélection 120 basée sur des critères différents.

Dans cet exemple, les harmoniques de rangs 5 et 6 peuvent être négligées du fait de leurs faibles amplitudes.

Les critères prédéterminés peuvent être choisis en fonction d'une précision de la modélisation souhaitée et/ou d'un coût en temps et en mémoire du procédé 100.

La finesse du découpage de la répartition des différentes composantes de la série de Fourier à modéliser en une ou plusieurs gammes de fréquences Δf dépend des critères prédéterminés choisis.

Une fois la gamme de fréquences Δf sélectionnée, le module de modélisation 80 détermine à l'étape de détermination 130 le filtre passe-bande à utiliser et le bruit blanc continu w(t) à fournir en entrée de ce filtre passe-bande pour former le bruit blanc filtré x(t) en sortie de ce filtre passe-bande.

La bande passante du filtre contient la gamme de fréquences Δf.

La bande passante du filtre ne contient parmi les fréquences fᵢ de la série de Fourier que celles qui sont dans la gamme de fréquences Δf. Autrement dit, la bande passante du filtre ne contient aucune fréquence fᵢ de la série de Fourier n'appartenant pas à la gamme de fréquences Δf.

Notamment la bande passante du filtre, dont les fréquences de coupure inférieures et supérieures sont notées f_{inf} et fₛᵤₚ dans la suite, peut être égale à la gamme de fréquences Δf.

Une fonction de transfert du filtre passe-bande et le bruit blanc continu w(t) sont choisis pour que dans la bande passante [f_{inf}, fₛᵤₚ], l'intégrale de la densité spectrale de puissance DSP(f) du bruit filtré x(t) soit supérieure ou égale à la somme des carrés des amplitudes harmoniques A_{iZ} de la série de Fourier dans cette même bande passante.

Le lien mathématique entre le bruit blanc continu w(t), la fonction de transfert du filtre passe bande et la densité spectrale de puissance du bruit filtré est de manière générale connu de l'homme de l'art pour chaque type de filtre.

Dans un mode de réalisation particulier, dans la bande passante [f_{inf}, fₛᵤₚ], l'intégrale de la densité spectrale de puissance DSP(f) du bruit filtré x(t) est égale à la somme des carrés des amplitudes harmoniques A_{iZ} de la série de Fourier dans cette même bande passante, selon l'équation 3 : ${\int }_{{f}_{inf}}^{{f}_{sup}} DSP \left(f\right) df = {\sum }_{{f}_{i} ∈ Δ f} {A}_{{i}_{Z}}^{2}$

Un exemple de densité spectrale de puissance souhaitée dans le cas de l'exemple de la figure 5 est représentée par la courbe C2 de la figure 5.

Le filtre passe-bande est un filtre d'ordre N supérieur ou égal à 2.

L'ordre N du filtre peut être choisi en fonction de la sélectivité requise et/ou d'une limite sur le coût en temps et/ou en mémoire du procédé 100.

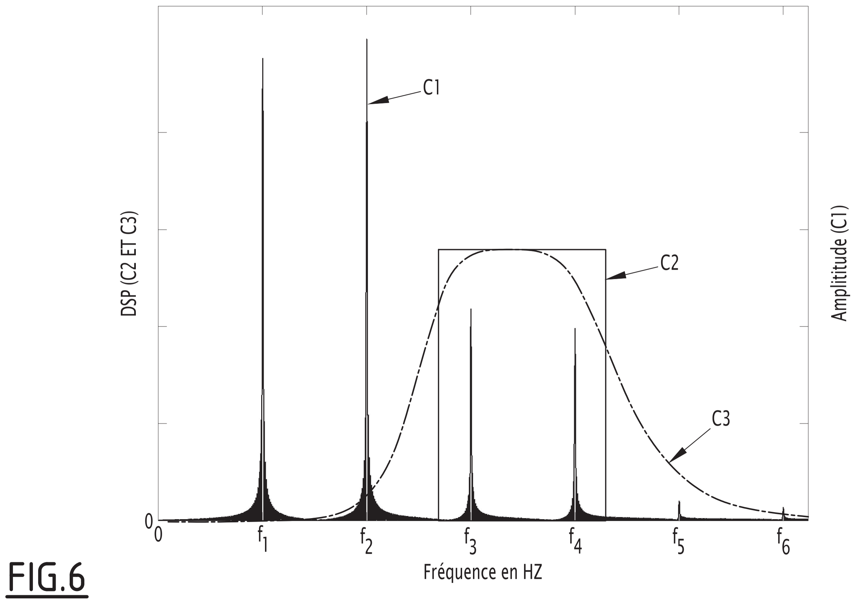

Un exemple de densité spectrale de puissance réellement obtenue avec un filtre passe-bande d'ordre 4 choisi sur la base de l'exemple de la figure 5 est représenté sur la courbe C3 de la figure 6.

Le module de modélisation 80 procède alors à la détermination 140 du modèle de l'erreur commise sur la vitesse angulaire mesurée Ω_{Z,mes}(t) avec le gyromètre 10 sur la base du bruit filtré x(t) obtenu en sortie du filtre passe-bande déterminé en réponse au bruit blanc continu w(t).

Pour simplifier, on décrit dans la suite un mode de réalisation de la détermination 130 du filtre passe-bande et du bruit blanc continu w(t) ainsi que la détermination 140 du modèle de l'erreur commise dans le cas particulier d'un filtre passe-bande d'ordre 2.

La généralisation à un filtre d'ordre N s'effectuera sans difficulté.

Dans le cas d'un filtre d'ordre 2, la représentation fréquentielle W(f) du bruit blanc continu en entrée du filtre et la représentation fréquentielle X(f) du bruit filtré sont liées par la fonction de transfert du filtre selon l'équation suivante, écrite en notation complexe : ${X \left(f\right)}_{¯} = {H}_{0} \frac{\frac{{f}_{0}}{{Q}_{F}} j f}{{\left(j f\right)}^{2} + \frac{{f}_{0}}{{Q}_{F}} j f + {\left({f}_{0}\right)}^{2}} {W \left(f\right)}_{¯}$ dans laquelle f₀ est la fréquence de résonance du filtre, H₀ est son gain en amplitude à la fréquence de résonance f₀ , Q_{F} est le facteur de qualité du filtre, j désigne l'unité imaginaire, c'est-à-dire le nombre complexe tel que j²=-1

La fonction de transfert du filtre passe-bande peut être représentée au moyen d'un modèle de propagation d'état 85 implémenté dans le module de modélisation 80.

Notamment, si l'on note Y(f) la représentation fréquentielle d'une variable auxiliaire y(t) et u(t) le vecteur d'état donné par l'équation suivante : $u \left(t\right) = \left(\begin{matrix}y \left(t\right) \\ \frac{dy}{dt}\end{matrix}\right)$ le filtre passe-bande peut être représenté par le modèle de propagation d'état 85 suivant : $\left\{\begin{matrix}\dot{u} \left(t\right) = \left[\begin{matrix}0 & 1 \\ - {\left(2{πf}_{0}\right)}^{2} & - \frac{2 {πf}_{0}}{{Q}_{F}}\end{matrix}\right] u \left(t\right) + \left[\begin{matrix}0 \\ 1\end{matrix}\right] w \left(t\right) = A u \left(t\right) + B w \left(t\right) \\ x \left(t\right) = \left[0 {H}_{0}\frac{2 {πf}_{0}}{{Q}_{F}}\right] u \left(t\right) = C u \left(t\right)\end{matrix}\right.$ dans lequel u(t) est le vecteur d'état du modèle de propagation d'état 85, w(t) est le bruit blanc continu en entrée du filtre passe-bande, x(t) est le bruit filtré obtenu en sortie du filtre passe-bande, f₀ est la fréquence de résonance du filtre passe-bande, Q_{F} est le facteur de qualité du filtre passe-bande, et H₀ est le gain du filtre passe-bande à la fréquence de résonance f₀.

Un calcul connu de l'homme de l'art à partir de l'équation (6) donne en effet : ${X \left(f\right)}_{¯} = {H}_{0} \frac{2 {πf}_{0}}{{Q}_{F}} j 2 πf Y \left(f\right)$ et ${Y \left(f\right)}_{¯} = \frac{1}{{\left(j 2πf\right)}^{2} + \frac{2 {πf}_{0}}{{Q}_{F}} j 2 πf + {\left(2 {πf}_{0}\right)}^{2}} {W \left(f\right)}_{¯}$

On retrouve donc bien l'équation (4)

La fréquence de résonance f₀ du filtre est par exemple choisie égale à la moyenne de fréquences extrêmes inférieures et supérieures f_{inf} et fₛᵤₚ.

Le facteur de qualité Q_{F} est choisi de manière à ce que la bande passante du filtre corresponde à [f_{inf}, fₛᵤₚ].

Pour le choix du bruit blanc continu w(t) et des autres caractéristiques du filtre passe-bande, on peut par exemple utiliser les équations suivantes :
En régime établi, la matrice d'évolution A du modèle de propagation 85 vérifie l'équation : $AP + {PA}^{T} + Q = 0$ dans laquelle P désigne la matrice de covariance du vecteur d'état u et Q la matrice de variance du vecteur B w(t) avec $B = \left(\begin{matrix}0 \\ 1\end{matrix}\right)$.

En notant Q₁(w(t)) ou de manière simplifiée, Q₁, la variance du bruit blanc continu w(t), la matrice de variance Q vérifie $Q = \left[\begin{matrix}0 & 0 \\ 0 & {Q}_{1}\end{matrix}\right]$.

L'équation 7 peut s'écrire : $\left[\begin{matrix}0 & 1 \\ - {\left(2 π {f}_{0}\right)}^{2} & - \frac{2 π {f}_{0}}{{Q}_{F}}\end{matrix}\right] \left[\begin{matrix}{p}_{11} & {p}_{12} \\ {p}_{12} & {p}_{22}\end{matrix}\right] + \left[\begin{matrix}{p}_{11} & {p}_{12} \\ {p}_{12} & {p}_{22}\end{matrix}\right] \left[\begin{matrix}0 & - {\left(2 π {f}_{0}\right)}^{2} \\ 1 & - \frac{2 π {f}_{0}}{{Q}_{F}}\end{matrix}\right] + \left[\begin{matrix}0 & 0 \\ 0 & {Q}_{1}\end{matrix}\right] = 0$

De sorte que les coefficients diagonaux de la matrice de covariance P vérifient : ${p}_{22} = \frac{1}{2} \frac{{Q}_{F}}{2 π {f}_{0}} {Q}_{1}$ ${p}_{11} = \frac{1}{2} \frac{{Q}_{F}}{{\left(2 π {f}_{0}\right)}^{3}} {Q}_{1}$

La variance P₁(x(t)) du bruit filtré souhaité en sortie du filtre passe-bande représenté par le modèle de propagation d'état 85 est donc dans ce cas liée à la variance Q₁ du bruit blanc continu en entrée du filtre passe-bande par l'équation qui suit : ${P}_{1} \left(x\left(t\right)\right) = {CPC}^{T} = \left[0 {H}_{0}\frac{2 π {f}_{0}}{{Q}_{F}}\right] \left[\begin{matrix}\frac{1}{2} \frac{{Q}_{F}}{{\left(2 π {f}_{0}\right)}^{3}} {Q}_{1} & 0 \\ 0 & \frac{1}{2} \frac{{Q}_{F}}{2 π {f}_{0}} {Q}_{1}\end{matrix}\right] \left[\begin{matrix}0 \\ {H}_{0} \frac{2 π {f}_{0}}{{Q}_{F}}\end{matrix}\right] = \frac{{H}_{0}^{2}}{2} \frac{2 π {f}_{0}}{{Q}_{F}} {Q}_{1} \left(w\left(t\right)\right)$

De manière avantageuse, les paramètres du filtre passe-bande sont choisis pour que l'intégrale de la densité spectrale de puissance DSP(f) du bruit filtré x(t) hors de la bande passante soit négligeable par rapport à l'intégrale dans la bande passante. Grâce à cette disposition, la variance P₁(x(t)) du bruit filtré x(t) (qui est mathématiquement égale à l'intégrale de la densité spectrale de puissance DSP(f) du bruit filtré x(t) pour les fréquences variant de 0 à l'infini) est très proche de l'intégrale de la densité spectrale de puissance DSP(f) du bruit filtré x(t) dans la bande passante du filtre passe-bande. Ainsi, la variance P₁(x(t)) du bruit filtré x(t) souhaité en sortie du filtre passe-bande est imposée par le fait que l'intégrale de la densité spectrale de puissance DSP(f) du bruit filtré x(t), dans la bande passante [f_{inf}, fₛᵤₚ] du filtre, doit être supérieure ou égale à la somme des carrés des amplitudes des composantes de ladite série de Fourier, dans cette même bande passante.

Il est donc possible de choisir le bruit blanc continu de sorte que la variance P₁(x(t)) du bruit filtré x(t), donnée par la relation ${P}_{1} \left(x\left(t\right)\right) = \frac{2 π {f}_{0} {H}_{0}^{2}}{2 {Q}_{F}} {Q}_{1} \left(w\left(t\right)\right)$, soit supérieure ou égale à la somme des amplitudes des composantes de ladite série de Fourier, dans la bande passante [f_{inf}, fₛᵤₚ] du filtre.

Le gain H₀ du filtre passe bande peut être au préalable choisi arbitrairement.

Dans un mode de réalisation, le filtre passe-bande déterminé à l'étape de détermination 130 est à temps continu et ce filtre est discrétisé de manière à former un filtre passe-bande à temps discret pour son implémentation sous la forme du modèle de propagation d'état 85 pour la détermination 140 du modèle d'erreur par le module de modélisation 80.

Une fois le modèle de propagation d'état 85 implémenté par le module de modélisation 80, le module de modélisation 80 peut fournir en sortie le bruit filtré x(t), ce bruit filtré x(t) constituant dans la gamme de fréquences Δf sélectionnée, le modèle de l'erreur commise sur la vitesse angulaire mesurée Ω_{Z,mes}(t) recherchée.

Ce modèle est ensuite fourni au module d'estimation 60.

Dans le cas particulier où le module d'estimation 60 implémente un filtre de Kalman, le modèle de propagation d'état 85 peut être directement intégré dans le filtre de Kalman du module d'estimation 60. Les composantes du vecteur d'état du modèle de propagation d'état 85 sont ainsi des composantes du vecteur d'état du filtre de Kalman du module d'estimation 60 et le bruit filtré x(t) est calculé directement au sein du filtre de Kalman du module d'estimation 60.

On décrit dans la suite ce mode de réalisation particulier, dans le cas particulier d'un filtre passe bande d'ordre 2 et dans le cas où l'on veut modéliser les termes de dérive D_{Z} dans l'équation ${Ω}_{Z , mes} \left(t\right) = \left(1+{ε}_{Z}\left(t\right)\right) {Ω}_{Z , reel} \left(t\right) + {D}_{Z} \left(t\right)$

Dans ce cas, le vecteur d'état du filtre de Kalman du module d'estimation 60 comprend les composantes y(t) et dy/dt du vecteur d'état u du modèle de propagation d'état 85. Il comprend également une composante δφ qui constitue une erreur d'attitude due à l'intégration de l'erreur *D_{Z}*(*t*).

Si on note V (t) le vecteur constitué par ces trois composantes présentes dans le vecteur d'état du filtre, V(t) est donc de la forme $V \left(t\right) = \left(\begin{matrix}δφ \\ y \left(t\right) \\ \frac{dy}{dt}\end{matrix}\right)$

Dans le filtre de Kalman du module d'estimation 60, on peut alors utiliser le modèle de propagation d'état suivant pour le vecteur V(t) : $\dot{V} \left(t\right) = \left[\begin{matrix}0 & 0 & {H}_{0} \frac{2 π {f}_{0}}{{Q}_{F}} \\ 0 & 0 & 1 \\ 0 & - {\left(2 π {f}_{0}\right)}^{2} & - \frac{2 π {f}_{0}}{{Q}_{F}}\end{matrix}\right] V \left(t\right) + \left[\begin{matrix}0 \\ 0 \\ 1\end{matrix}\right] w \left(t\right)$

Ainsi le filtre de Kalman du module d'estimation 60 effectue le calcul du terme $\left[0 0 {H}_{0}\frac{2 π {f}_{0}}{{Q}_{F}}\right] V$ et donc du terme $\left[0 {H}_{0}\frac{2 π {f}_{0}}{{Q}_{F}}\right] \left(\begin{matrix}y \left(t\right) \\ \frac{dy}{dt}\end{matrix}\right)$ qui correspond au bruit filtré x(t).

Une fois le modèle de l'erreur déterminé ou simultanément à cette détermination 140, le module d'estimation 60 procède à la détermination 145 des données de navigation 5 hybridées sur la base du modèle d'erreur déterminé, des données additionnelles 40 reçues et des données inertielles 35, les données de navigation 5 hybridées pouvant ensuite être fournies sur une sortie du dispositif gyrométrique 7.

Dans un mode de réalisation particulier, le modèle d'erreur déterminé par le module de modélisation 80 est stocké intermédiairement dans une base de données de modèles d'erreur.

Dans un deuxième mode de réalisation, le dispositif gyrométrique 7 comprend le gyromètre 10 et le calculateur 15 mais il ne comprend pas de capteur 25.

Dans ce cas, le calculateur 15 ne reçoit pas de données additionnelles 40 et n'est pas configuré pour déterminer des données de navigation 5 de type données de navigation hybridées mais pour déterminer des données de navigation 5 inertielles, ces données comprenant des données de navigation proprement dites, telles que des données d'attitude et/ou d'accélération linéaire et/ou angulaire, et/ou de vitesse linéaire et/ou angulaire et/ou de position, et des écarts-types d'erreur respectifs, ces données et ces écarts-types étant formés à partir des données de mesure inertielle 35 et du modèle d'erreur déterminé par le module de modélisation 80

Le calculateur 15 reçoit donc dans ce cas les données de mesure inertielles 35, sans recevoir de données additionnelles 40.

En particulier, dans le deuxième mode de réalisation, le module d'estimation 60 est configuré pour recevoir le modèle d'erreur déterminé par le module de modélisation 80 et pour calculer l'écart-type de l'erreur commise sur la vitesse angulaire mesurée Ω_{Z,mes}(t) mesurée par le gyromètre 10 à partir de ce modèle d'erreur.

Dans un mode de réalisation particulier, le modèle d'erreur fourni au module d'estimation 60 est la variance du bruit blanc filtré x(t).

L'écart-type ainsi fourni est notamment un majorant de l'écart-type de l'erreur réellement commise sur la vitesse angulaire mesurée Ω_{Z,mes}(t) mesurée par le gyromètre 10.

Le dispositif gyrométrique 7 selon le deuxième mode de réalisation est configuré pour mettre en œuvre le procédé 100 selon un deuxième mode de réalisation, le procédé de navigation comprenant alors :
1) la mise en œuvre des étapes de fourniture 110, de sélection 120, de détermination 130 du filtre passe-bande, et de détermination 140 du modèle d'erreur décrites précédemment, et
2) la détermination 145 de données de navigation 5 inertielles et des écarts-types respectifs, ces données et ces écarts-types étant formés à partir de la mesure effectuée avec le gyromètre 10 et de l'écart-type de l'erreur commise sur cette mesure déterminé au moyen du modèle d'erreur fourni par le module de modélisation 80.

L'au moins une donnée de navigation 5 peut alors être fournie sur une sortie du dispositif gyrométrique 7.

Le premier et le deuxième mode de réalisation peuvent être combinés.

Quel que soit le mode de réalisation, le module de modélisation 80 permet une implémentation en temps réel du modèle d'erreur au sein du module d'estimation 60, notamment par l'implémentation d'un filtre de Kalman dans le module d'estimation 60, et ainsi de réaliser une navigation inertielle précise avec des capteurs à moindre coût.

De plus, le procédé 100 selon l'invention est peu coûteux en temps et en mémoire, de sorte que le calculateur 15 peut comprendre un processeur de faible coût financier et/ou de faible consommation énergétique.

Enfin, dans le cas où le filtre passe-bande est discrétisé, le procédé 100 selon l'invention permettent de vraiment modéliser des états à moyenne nulle sans repliement basse fréquence.

## Revendications

1. Procédé (100) de détermination de données de navigation (5) au moyen d'un dispositif gyrométrique (7) comprenant un calculateur (15) et un gyromètre (10), le gyromètre (10) comprenant un boîtier (57) et un élément vibrant (75) par rapport au boîtier (57), le procédé (100) comprenant :
a) la fourniture (110) au calculateur (15) d'au moins une série de Fourier d'un terme d'erreur (δ_{Z}(t)) modélisant au moins un défaut du gyromètre (10), ledit défaut étant fonction d'une position angulaire (θ_{Z}) de l'élément vibrant (75) dans un repère (XYZ) lié au boîtier (57) ;
b) la sélection (120) d'au moins une gamme de fréquences sur la base d'une pluralité d'amplitudes (A_{iZ}) et de fréquences respectives (fᵢ) de ladite série de Fourier ;
c) la détermination (130) d'un filtre passe-bande et d'un bruit blanc continu (w(t)) à fournir en entrée du filtre passe-bande pour obtenir un bruit filtré (x(t)) en sortie du filtre passe-bande, tels que :
- une bande passante ([f_{inf}, fₛᵤₚ]) du filtre contienne ladite gamme de fréquences et ne contienne aucune des fréquences respectives (fᵢ) de ladite série de Fourier qui ne sont pas dans ladite gamme de fréquences, et
- dans la bande passante ([f_{inf}, fₛᵤₚ]), l'intégrale d'une densité spectrale de puissance (DSP) du bruit filtré (x(t)) soit supérieure ou égale à la somme des carrés des amplitudes (A_{iZ}) des composantes de ladite série de Fourier dans cette même bande passante ;
d) la détermination (140) d'un modèle de l'erreur commise sur une mesure (Ω_{Z,mes}(t)) effectuée avec le gyromètre (10) sur la base dudit bruit filtré (x(t)) ; et
e) la détermination (145) des données de navigation (5) sur la base dudit modèle déterminé et d'au moins une mesure effectuée par le gyromètre (10).

2. Procédé (100) selon la revendication 1 dans lequel les données de navigation (5) comprennent:
* des données de navigation hybridées, le procédé (100) comprenant alors la réception par le calculateur (15) de données additionnelles (40), qui comprennent des données d'accélération et/ou de vitesse et/ou de position et/ou d'attitude fournies par un capteur (25) de données additionnelles (40) et/ou des données relatives à l'état de mouvement du boîtier (57) du gyromètre (10), et l'utilisation de ces données additionnelles (40) pour la détermination desdites données de navigation (5) hybridées, et/ou
* des données de navigation inertielles et des écarts types d'erreur respectifs, ces données et ces écarts-types étant formés à partir de la mesure (Ω_{Z,mes}(t)) effectuée avec le gyromètre (10) et d'un écart-type d'une erreur commise sur cette mesure déterminé au moyen dudit modèle déterminé.

3. Procédé (100) selon l'une quelconque des revendications précédentes, dans lequel le filtre passe-bande et le bruit blanc continu (w(t)) sont choisis de manière à ce que, dans la bande passante ([f_{inf}, fₛᵤₚ]), l'intégrale de la densité spectrale de puissance (DSP) du bruit filtré (x(t)) soit égale à la somme des carrés des amplitudes A_{iZ} des composantes de ladite série de Fourier dans cette même bande passante

4. Procédé (100) selon l'une quelconque des revendications précédentes, dans lequel la détermination (140) dudit modèle de l'erreur comprend l'implémentation du filtre passe-bande au moyen d'un modèle de propagation d'état (85) et la détermination du bruit filtré (x(t)) et/ou d'une variance du bruit filtré (P₁(x(t))).

5. Procédé (100) selon la revendication 4, dans lequel le modèle de propagation d'état (85) est représenté par le modèle suivant : $\left\{\begin{matrix}\dot{u} \left(t\right) = \left[\begin{matrix}0 & 1 \\ - {\left(2 π {f}_{0}\right)}^{2} & - \frac{2 π {f}_{0}}{{Q}_{F}}\end{matrix}\right] u \left(t\right) + \left[\begin{matrix}0 \\ 1\end{matrix}\right] w \left(t\right) \\ x \left(t\right) = \left[0 {H}_{0} \frac{2 π {f}_{0}}{{Q}_{F}}\right] u \left(t\right)\end{matrix}\right.$ dans lequel :
u(t) désigne un vecteur d'état de dimension 2 du modèle de propagation d'état
w(t) désigne le bruit blanc continu en entrée du filtre passe-bande,
x(t) désigne le bruit filtré obtenu en sortie du filtre passe-bande,
f₀ désigne une fréquence de résonance du filtre passe-bande,
Q_{F} désigne un facteur de qualité du filtre passe-bande, et
H₀ désigne un gain du filtre passe-bande à la fréquence de résonance.

6. Procédé (100) selon la revendication 5, dans lequel une variance (Q₁(w(t)) du bruit blanc continu (w(t)), un facteur de qualité (Q_{F}) du filtre passe-bande, une fréquence de résonance (f₀) du filtre passe-bande et un gain (H₀) du filtre passe-bande à la fréquence de résonance (f₀) sont choisis de façon à ce que la variance (P₁(x(t))) du bruit filtré, donnée par la relation ${P}_{1} \left(x\left(t\right)\right) = \frac{2 {πf}_{0} {H}_{0}^{2}}{2 {Q}_{F}} {Q}_{1} \left(w\left(t\right)\right)$, soit supérieure ou égale à la somme des carrés des amplitudes des composantes de ladite série de Fourier dans la bande passante du filtre.

7. Procédé (100) selon l'une quelconque des revendications 4 à 6, dans lequel le modèle de propagation d'état (85) est calculé au moyen d'un module d'estimation (60), les composantes du vecteur d'état du modèle de propagation d'état (85) étant des composantes d'un vecteur d'état d'un filtre de Kalman implémenté dans le module d'estimation (60) et ayant au moins une autre composante formée à partir d'une donnée de mesure inertielle (35) déterminée sur la base des mesures effectuées par ledit gyromètre (10),le bruit filtré x(t) étant calculé au sein du filtre de Kalman.

8. Procédé (100) selon l'une quelconque des revendications 4 à 7, comprenant une étape de discrétisation du filtre passe-bande, le modèle de propagation (85) représentant le filtre passe-bande après sa discrétisation.

9. Procédé (100) selon l'une quelconque des revendications précédentes, dans lequel une fréquence de résonance (f₀) du filtre passe-bande est choisie au centre de ladite bande passante ([f_{inf}, fₛᵤₚ]).

10. Procédé (100) selon l'une quelconque des revendications précédentes, dans lequel le gyromètre (10) est configuré pour que la position angulaire (θ_{Z}) de l'élément vibrant (75) varie en fonction d'une vitesse angulaire de commande (ω_{com}) imposée à cet élément vibrant et/ou d'une vitesse angulaire de rotation du boîtier (57) dans un référentiel inertiel.

11. Procédé (100) selon la revendication précédente, dans lequel au moins deux décompositions en série de Fourier sont fournies pour au moins deux vitesses angulaires de rotation du boîtier (57) différentes, ladite bande passante étant sélectionnée sur la base de l'ensemble des décompositions en série de Fourier fournies.

12. Dispositif gyrométrique (7) comprenant un calculateur (15) et un gyromètre (10), le gyromètre (10) comprenant un boîtier (57) et un élément vibrant (75) par rapport au boîtier (57), le dispositif gyrométrique (7) étant configuré pour mettre en œuvre les étapes du procédé (100) de détermination de données de navigation selon l'une quelconque des revendications 1 à 11.

13. Dispositif gyrométrique (7) selon la revendication précédente comprenant une centrale inertielle (20) comprenant ledit gyromètre (10), dans lequel :
- le dispositif gyrométrique comprend en outre un capteur (25) configuré pour fournir au calculateur (15) des données additionnelles (40) comprenant des données d'attitude et/ou de vitesse et/ou de position et/ou d'accélération, et/ou
- la centrale inertielle (20) est en outre configurée pour fournir des données relatives à l'état de mouvement du boîtier (57) du gyromètre (10),
le dispositif gyrométrique (7) étant configuré pour déterminer des données de navigation (5) hybridées.
